# EUROPEAN PATENT APPLICATION

(11) **EP 0 943 227 A1**
(43) Date of publication of application: **22.09.1999**
(21) Application number: 99200564.5
(22) Date of filing: 01.03.1999
(51) Int. Cl.: A01C 17/00

(54) **An implement for spreading material**

(30) Priority: 20.03.1998 NL 1008664
(71) Applicant: MAASLAND N.V., 3155 PD Maasland (NL)
(72) Inventor: Bom, Cornelis Johannes Gerardus, 3181 VC Rozenburg (NL); van der Lely, Alexander, 3065 NA Rotterdam (NL)
(74) Representative: Corten, Maurice Jean F.M.

(57) **Abstract**

An implement for spreading material, such as fertilizer, said implement comprising at least one spreading member that rotates about an axis, a drive for driving the axis, and means for interrupting the rotating movement of the spreading member by breaking the driving connection between the spreading member and the drive, the implement being provided with a gearwheel housing (6) containing coupling means (24, 30) with the aid of which the drive of the spreading member can be broken, which gearwheel housing (6) can be removed from the implement.

## Description

The invention relates to an implement for spreading material, such as fertilizer, said implement comprising at least one spreading member that rotates about an axis, a drive for driving the axis, and means for interrupting the rotating movement of the spreading member by breaking the driving connection between the spreading member and the drive.

Such an implement is known, e.g. from EU-A-0 287 006.

With the implement described in this publication it is possible to uncouple a spreading disc from a central gearbox.

The invention aims at providing an implement in which a spreading disc can be uncoupled in a simpler manner.

According to the invention the implement is provided with a gearwheel housing containing coupling means with the aid of which the drive of the spreading member can be broken, which gearwheel housing can be removed from the implement.

An embodiment of the invention relates to an implement for spreading material, such as fertilizer, said implement comprising at least one spreading member that rotates about an axis, a drive for driving the axis, and means for interrupting the rotating movement of the spreading member by breaking the driving connection between the spreading member and the drive.

By means of this construction a compact and simple solution can be obtained. Another embodiment of the invention relates to an implement for spreading material, such as fertilizer, said implement comprising at least one spreading member that rotates about an axis, a drive for driving the axis and means for interrupting the rotating movement of the spreading member by breaking the driving connection between the spreading member and the drive, said means comprising a drive portion coupled with the spreading member and a drive portion coupled with the drive, one of the drive portions being movable around the other, and coupling means being provided for breaking and restoring the driving connection between the two drive portions. This embodiment describes a constructionally favourable solution.

The invention will be explained in further detail on the basis of two embodiments.
Figure 1 is a rear view of an implement according to the invention;
Figure 2 is at an enlarged scale a side view of a housing in which the means for coupling and uncoupling are accommodated;
Figure 3 is at an even more enlarged scale a longitudinal cross-section of the housing in Figure 2;
Figure 4 is a cross-section taken on the line IV - IV in Figure 3, and
Figure 5 is a partial cross-section and a partial side view of another embodiment.

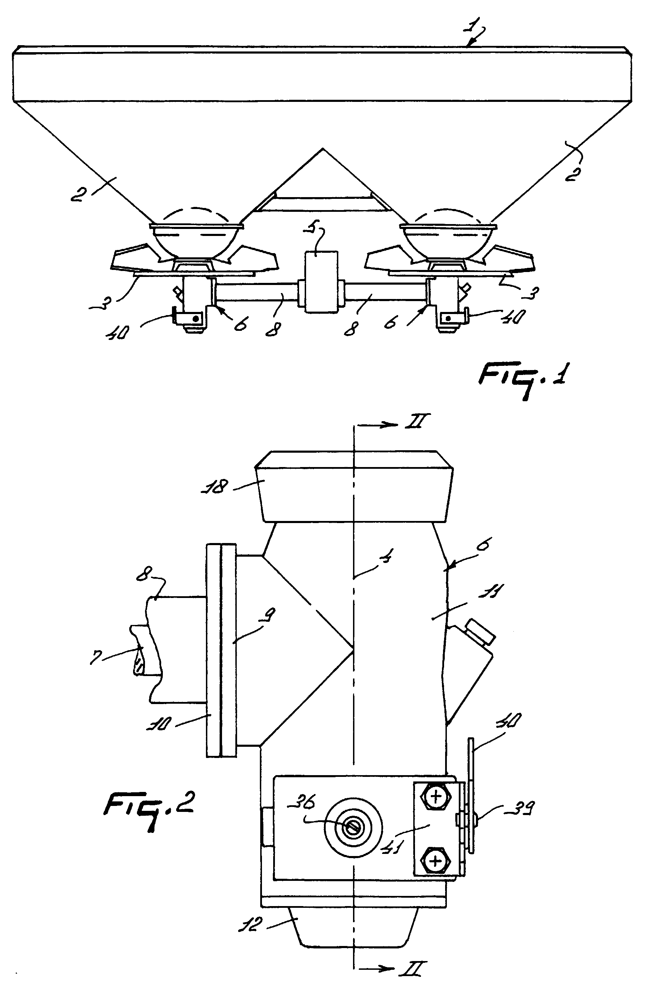

Figure 1 shows an implement for spreading material, in this situation fertilizer, which implement comprises a reservoir 1 with two discharge spouts 2. Under each of the discharge spouts 2 there is disposed a spreading disc 3 which is capable of spreading the fertilizer from the reservoir. Each of the spreading discs 3 rotates about an imaginary axis 4.

The implement comprises a centrally located gearbox 5 which is coupled with the power take-off shaft of a non-shown tractor.

Under each of the spreading discs 3 there are provided gearwheel housings 6; these gearwheel housings constitute gearboxes. The drive accommodated in these gearwheel housings 6 is driven from the power take-off shaft by means of intermediate shafts 7 accommodated in frame tubes 8. In a manner known per se the amount of fertilizer that is supplied to the spreading discs can be adjusted. An implement of this type is known.

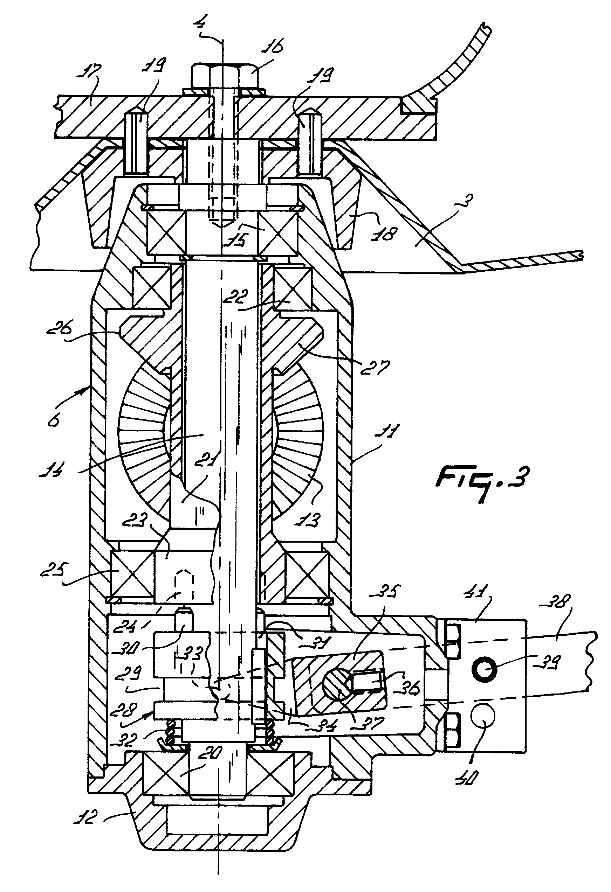

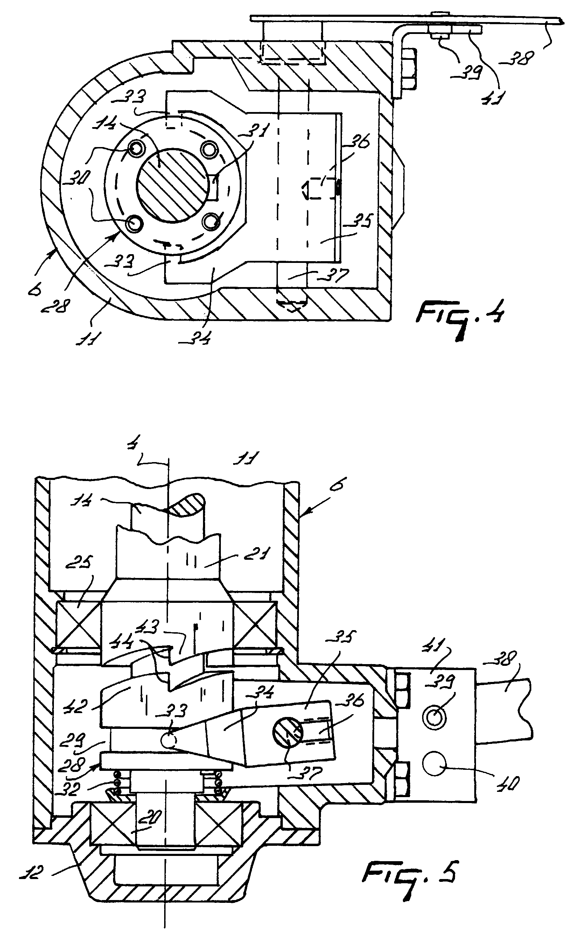

Figure 2 represents a gearwheel housing 6 that can be fitted detachably under the spreading discs 3, as will be described with reference to Figure 3.

As depicted in Figure 2, the gearwheel housing 6 is provided at its lateral side with a flange 9 by means of which it can be fitted to a flange 10 of the frame tube 8. The drive shaft or intermediate shaft 7 extends from the central gearbox 5 through the frame tube 8.

As shown in Figure 3, the gearwheel housing 6 comprises an outer casing 11 and a bottom 12. In the gearwheel housing 6 there is accommodated a gearwheel 13 that is fitted to the drive shaft or intermediate shaft 7. In the gearwheel housing 6 there is a central axis 14 whose centre line coincides with the centre line 4 of the spreading disc 3. At its upper side the central axis 14 is bearing-supported in the gearwheel housing 6 by means of a bearing 15. The central axis is further fastened to the bottom 17 of the discharge spout 2 by means of a bolt 16. By means of a support 18 and pins 19 the spreading disc 3 is fitted to the bottom 17. At its lower side the central axis 14 is supported in a bearing 20 which is disposed in the bottom 12.

Around the axis 14 there is disposed a bushing 21 which is supported at its upper side by a bearing 22. At its lower side the bushing 21 has a thickening 23 whose lower side is provided with four boreholes 24 that are orientated downwardly, the arrangement of the boreholes 24 being such that they are placed on a circular circumference at intervals of 90°.

The thickening 23 is supported at its outer side by a bearing 25. All the bearings 15, 22 and 25 are supported in the outer casing 11. At its upper side the bushing 21 has a thickening 26 provided with a crown gear 27. Said crown gear 27 engages with the gearwheel 13.

Around the lower portion of the axis 14 there is disposed a bushing 28. This bushing is provided with a recess 29 having a circular inner circumference.

At its upper side the bushing 28 is provided with four pins 30 which are placed in an arrangement corresponding to that of the boreholes 24, i.e. on a circular circumference at intervals of 90°. The bushing 28 has an upwardly orientated groove 31 which is disposed around a key fitted to the axis 14, the arrangement being such that there is created a straight guide means for the bushing 28 along the axis 14 in a direction parallel to the centre line (Figure 3). Also the pins 30 and the boreholes 24 extend parallel to the centre line, the arrangement being such that, when the bushing 28 is moved upwards and the pins 30 are located under the boreholes 24, the pins fit the boreholes. At its lower side the bushing 28 is supported by a spring 32 that pushes the bushing upwards.

In the circular recess 29 of the bushing 28 there are on either side of the bushing two projections 33 facing each other. These projections 33 constitute part of arms 34 of a control element 35. By means of a bolt 36 said control element 35 is fastened to an axis 37 that is rotatably disposed in the outer casing 11 and projects therefrom at one side.

On its outside the axis 37 is provided with a handle 38. If the handle 38 is pulled upwards, the pins 30, which are normally located in the boreholes 24 and are pulled into the boreholes by the spring 32, are pulled out of the boreholes 24, so that there is no longer a driving connection between the bottom 12 and the gearwheel 13. By means of a pin 39 the movement of the handle 38 can be blocked in two positions in one of the two apertures 40 of a blocking bracket 41.

The implement operates as follows.

Especially with an implement comprising more than one spreading disc, as represented in Figure 1, it may be of importance that upon spreading along the field edges, a spreading disc is put out of operation, so that fertilizer is prevented from being broadcast in undesired quantities beyond the boundary of the field.

If the drive of the spreading disc 3, shown in Figure 2, has to be disconnected, the pin 39 is detached from the handle 38, so that the handle 38 can be pulled upwards about the axis 37 and the shaft is rotated. Consequently, the control element 35 pivots downwards and the arms 34 and the projections 33 pull the bushing 28 downwards against the action of the spring 32, so that the pins 30 are pulled out of the boreholes 24. As a result thereof, the driving connection between the flange 9 and the spreading disc 3 is broken. The boreholes 24 and the pins 30 constitute coupling means.

The driving connection extends from the drive shaft or intermediary shaft 7 via the gearwheel 13, the crown gear 27 of the thickening 26, the bushing 21, the thickening 23, the boreholes 24, the pins 30, the bushing 28 with the projection 33, the axis 14 and the bolt 16, and is finally transferred to the spreading disc 3.

When the coupling has to be broken or restored, the drive shaft 7 has to be stopped. In case a restoration of the connection is desired, the spreading disc 3 has to be rotated manually until the pins 30 come in front of the boreholes 24 and can be inserted therein. Thereafter the handle 38 with the pin 39 can be locked again.

If desired, the handle 38 can be operated from the tractor. This is possible by hydraulic control of the arms, but also by electronic control. This is particularly advantageous if the further control of the implement, e.g. the adjustment of the slides and the outlets for the supply of fertilizer, can be effected electronically as well.

Figure 5 shows another embodiment. Parts corresponding to those of the previous figures are designated by the same reference numerals.

In this situation the upper side of the bushing 28 is not provided with pins, but with upwardly orientated claws 42. The thickening 23 is not provided with boreholes, but with claws 43 that correspond to the claws 42 and are orientated downwardly. In this manner, when the handle 38 is moved upwards, there is obtained a claw coupling.

An advantage of this construction is that the claws, which have obliquely extending sides 44, automatically engage with each other when the flange 9 is put in rotation.

As the gearwheel housing 6 including the activating device, constituted inter alia by the adjustable bushing 28 with handle 38, is fastened to the frame tube 8 with bolts by means of the flanges 9 and 10, and the spreading disc 3 is fastened to the axis 14 by means of the bolt 16, it is possible to remove, if desired, one or more gearwheel housings 6 entirely from the machine and to replace them by a gearwheel housing that is not provided with a disengageable axis 14. In this situation the fastening of the gearwheel 13 to the shaft 7 is maintained, the apertures in the flanges 9 and 10 having such dimensions that the gearwheel can pass through. Accordingly, when the user of the implement does not have a need for a spreading disc that can be put out of operation, and wishes e.g. to use an other edge-spreading implement, it is possible to use an other gearwheel housing that is not provided with a coupling.

In that situation the spreading disc 3 can be mounted, if desired, on the non-disengageable axis. As shown in Figure 2, the gearwheel housing is provided with a supply 45 for oil that is capable of being shut off, thus ensuring a proper lubrication of the gearwheels.

The invention does not only relate to what has been described in the claims, but also relates to what has been described in the foregoing and shown in the drawings.

## Claims

1. An implement for spreading material, such as fertilizer, said implement comprising at least one spreading member that rotates about an axis, a drive for driving the axis, and means for interrupting the rotating movement of the spreading member by breaking the driving connection between the spreading member and the drive, characterized in that the implement is provided with a gearwheel housing (6) containing coupling means (24, 30) with the aid of which the drive of the spreading member can be broken, which gearwheel housing (6) can be removed from the implement.

2. An implement as claimed in claim 1, characterized in that the coupling means (24, 30) of the implement, with the aid of which the drive of the axis can be broken and restored, operate in the longitudinal direction of the axis, while during the interruption of the driving connection the means (24, 30) maintain their position in the longitudinal direction of the axis.

3. An implement for spreading material, such as fertilizer, said implement comprising at least one spreading member that rotates about an axis, a drive for driving the axis, and means for interrupting the rotating movement of the spreading member by breaking the driving connection between the spreading member and the drive, characterized in that the coupling means (24, 30) of the implement, with the aid of which the drive of the axis can be broken and restored, operate in the longitudinal direction of the axis, while during the interruption of the driving connection the means (24, 30) maintain their position in the longitudinal direction of the axis.

4. An implement as claimed in any one of the preceding claims, said implement comprising a drive portion that is coupled to the spreading member and a drive portion that is coupled to the drive, characterized in that one of the drive portions (21) is movable around the other drive portion (15) and that there are provided coupling means (24, 30) for breaking and restoring the driving connection between the two drive portions.

5. An implement for spreading material, such as fertilizer, said implement comprising at least one spreading member that rotates about an axis, a drive for driving the axis, and means for interrupting the rotating movement of the spreading member by breaking the driving connection between the spreading member and the drive, said means comprising a drive portion that is coupled to the spreading member and a drive portion that is coupled to the drive, characterized in that one of the drive portions (21) is movable around the other drive portion (15) and that there are provided coupling means (24, 30) for breaking and restoring the driving connection between the two drive portions.

6. An implement as claimed in any one of the preceding claims, characterized in that the gearwheel housing (6) is fastened to a frame beam (8) of the implement, which frame beam accommodates a drive shaft (7).

7. An implement as claimed in claim 6, characterized in that a gearwheel (13) is fitted to the drive shaft, which gearwheel (13) is located in the gearwheel housing (6) during operation.

8. An implement as claimed in claim 7, characterized in that upon removal of the gearwheel housing the fastening of the gearwheel (13) to the drive shaft (7) is maintained.

9. An implement as claimed in any one of claims 6, 7 and 8, characterized in that the gearwheel housing (6) is provided with a flange (9) having an aperture through which the gearwheel (13) can be passed.

10. An implement as claimed in any one of the preceding claims, characterized in that the gearwheel (13) cooperates with a crown gear (27) whose imaginary axis (14) coincides with the imaginary axis (4) of the spreading disc.

11. An implement as claimed in any one of the preceding claims, characterized in that the gearwheel housing (6) comprises an axis (14) to which the spreading disc (3) is fastened, which axis (14) is supported in the gearwheel housing (6) by means of bearings (15, 20).

12. An implement as claimed in claim 11, characterized in that around the axis there is disposed a freely rotatable bushing (21) whose upper side is provided with a crown gear (27) that engages with the gearwheel (13).

13. An implement as claimed in any one of the preceding claims, characterized in that the lower side of the bushing (21) comprises coupling means (30) with the aid of which the driving connection can be broken and restored.

14. An implement as claimed in claim 13, characterized in that around the axis (14) there is provided a bushing (28) that also comprises coupling means (30) that are adapted to cooperate with the coupling means (24) at the lower side of the bushing (21).

15. An implement as claimed in claim 13 and 14, characterized in that the coupling means (30) are constituted by a claw coupling (42, 43).

16. An implement as claimed in claim 15, characterized in that the claw coupling consists of a number of pins (30) and corresponding boreholes (24), which are placed in an equal arrangement, e.g. on a circular circumference at intervals of 90°.

17. An implement as claimed in claim 16, characterized in that the claws of the claw coupling have obliquely and upwardly extending sides (44).

18. An implement as claimed in any one of the preceding claims, characterized in that the bushing (28) is fastened to the axis (14) with the aid of a straight guide means (31), so that the bushing can be moved upwards and downwards in the longitudinal direction of the axis.

19. An implement as claimed in any one of the preceding claims, characterized in that the bushing is provided with a groove and can be moved upwards and downwards by means of projections fitting the groove, which projections are pivotable about an axis.

20. An implement as claimed in any one of the preceding claims, characterized in that the coupling can be broken and restored from a tractor by which the implement is propelled.

21. An implement as claimed in claim 20, characterized in that breaking and restoring of the coupling can be effected hydraulically.

22. An implement as claimed in any one of claims 1 - 21, characterized in that breaking and restoring can take place electronically.

23. An implement as claimed in any one of claims 1 - 21, characterized in that breaking and restoring of the coupling can be effected by means of a handle (38) disposed on the outside of the gearwheel housing.

24. A gearwheel housing as described in any one of the preceding claims, characterized in that the gearwheel housing is exchangeably fitted to the implement.
